# EUROPÄISCHE PATENTANMELDUNG

(11) **EP 1 093 314 A1**
(43) Veröffentlichungstag der Anmeldung: **18.04.2001**
(21) Anmeldenummer: 00122413.8
(22) Anmeldetag: 13.10.2000
(51) Int. Cl.: H04Q 7/22

(54) **Chipkarte mit Spielefunktion für Mobiltelefone**

(30) Priorität: 15.10.1999 DE 29918148 U
(71) Anmelder: DeTeMobil Deutsche Telekom MobilNet GmbH, 53227 Bonn (DE)
(72) Erfinder: Grajetzki, Claus, 48163 Münster Albachten (DE)

(57) **Zusammenfassung**

Die Erfindung betrifft eine Chipkarte für Mobiltelefone, wie sie heute vielfach verwendet wird.
Die Chipkarte zeichnet sich dadurch aus, daß in einem Speicher der Chipkarte mindestens ein elektronisches Spiel gespeichert ist, das über das Mobiltelefon spielbar ist. Ferner können im Speicher Grafiken, Bildvorlagen oder Pictogramme gespeichert sein, die z.B. als schmückendes Beiwerk zusammen mit Textnachrichten und Grußbotschaften versendet werden können.

## Beschreibung

Die Erfindung betrifft eine Chipkarte für Mobiltelefone nach dem Oberbegriff der unabhängigen Schutzansprüche.

In modernen Mobilfunknetzen werden Chipkarten, auch bekannt unter dem Namen SIM-Karte oder Telekarte bzw. Pre-Paid-Karten, für die Teilnehmerverwaltung, die Zugangskontrolle und die Verschlüsselung verwendet. Diese Chipkarte, die der Anwender in sein Mobiltelefon schiebt, beinhaltet u.a. einen Mikroprozessor mit Ein- und Ausgabeschnittstellen sowie einen Datenspeicher. Gewöhnlich beinhaltet die Chipkarte einen Festwertspeicher sowie einen wiederbeschreibbaren Speicher, dessen Größe variabel ist und bis zu einigen 10 kByte betragen kann.

Es sind ferner Mobiltelefone bekannt, welche zur Unterhaltung der Benutzer integrierte Spiele und Speilfunktionen aufweisen, die über das Mobiltelefon nach Art eines Gameboy gespielt werden können. Dazu werden die Anzeige und die Tastatur des Mobiltelefons zur Darstellung bzw. Steuerung des Spiels verwendet. Die Mobiltelefone beinhalten jedoch im wesentlichen nur ein oder zwei Spiele, die nicht veränderbar oder gegen andere Spiele austauschbar sind. D.h. die Spielfunktionen sind gerätegebunden und nicht portierbar.

Der vorliegenden Erfindung liegt daher die Aufgabe zugrunde, eine Chipkarte vorzuschlagen, welche die Nutzungsmöglichkeit von Mobiltelefonen erweitert und für den Benutzer attraktiver wird.

Die Lösung der Aufgabe wird durch die Merkmale der unabhängigen Schutzansprüche erreicht.

Wesentliches Merkmal der Erfindung ist, daß in einem Speicher der Chipkarte mindestens ein elektronisches Spiel gespeichert ist, das über das Mobiltelefon spielbar ist. Ferner können im Speicher Graphiken, Bildvorlagen oder Piktogramme gespeichert sein, die z. B. als schmückendes Beiwerk zusammen mit Textnachrichten, E-Mails und Grußbotschaften versendet werden können.

Bekanntlicherweise weist eine Chipkarte sowohl Festwertspeicher als auch einen wiederbeschreibbaren Speicherbereich auf. Im wesentlichen spielt es für die Ausführung der Erfindung keine Rolle, ob das Spiel bzw. die Graphiken, Bildvorlagen oder Piktogramme im Festwertspeicher (ROM) oder aber im wiederbeschreibbaren Speicherbereich (RAM, EEPROM) gespeichert sind. Vorzugsweise ist jedoch eine Speicherung in einem wiederbeschreibbaren Speicherbereich vorgesehen.

In einer bevorzugten Ausführungsform der Erfindung ist vorgesehen, daß die im Speicher enthaltenen Daten über die Funkschnittstelle des Mobiltelefons ladbar oder veränderbar sind. Dem Teilnehmer ist es somit möglich, aus einem bestimmten Angebot von Spielen zu wählen und ein ausgewähltes Spiel über die Funkschnittstelle auf seine Chipkarte zu laden. Diese Spiele sind somit als eine Art Dienstleistungspakete über das Mobilfunknetz abrufbar und können in verschiedenen Spielstärken und auch z.B. mit verschiedenen Partnern über das Mobilfunknetz gespielt werden. Ist die Chipkarte z. B. eine wiederaufladbare Telefonkarte, also eine sogenannte Pre-Paid-Card, so kann ein update oder ein Wechsel des Spiels während des Wiederaufladens der Chipkarte erfolgen.

Wie bereits erwähnt, können die Bildvorlagen oder Piktogramme als schmückendes Beiwerk zu z.B. SMS-Nachrichten oder Fax-Mitteilungen, mit versandt werden.

Auch hier ist vorgesehen, daß beim Wiederaufladen der Chipkarte neue Motive in den Speicher geladen werden können.

Insbesondere ist auch vorgesehen, daß die Spielefunktion der Chipkarte unabhängig von der Telefonfunktionalität auch nach der Deaktivierung der Rufnummer erhalten bleibt. Somit kann auch mit einer leeren Telefonkarte weiterhin gespielt werden.

Die Vorteile der Erfindung liegen auf der Hand. Zum einen ist es möglich, eine Vielzahl von Spielen auf die Chipkarte zu laden und auf dem Mobiltelefon zu spielen. Die in die Chipkarte speicherbaren Bildvorlagen und Piktogramme ermöglichen sogenannte Schmuckblatt-Telegramm-Nachnchten und Grüße an Dritte zu versenden, Insgesamt wird die Anschaffung einer Telefonkarte und eines Mobiltelefons attraktiver, da sie nicht nur zum Telefonieren verwendet werden kann. Die erfindungsgemäße Chipkarte ermöglicht eine Portierbarkeit von Daten beim Gerätewechsel, d.h. beim Wechsel des Mobiltelefons. Der Anwender kann seine 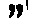 Lieblingsspiele" mitnehmen.

Nachfolgend wird ein Ausführungsbeispiel der Erfindung anhand einer Zeichnungsfigur erläutert. Der Zeichnungsbeschreibung sind dabei weitere Merkmale und Vorteile der Erfindung zu entnehmen.

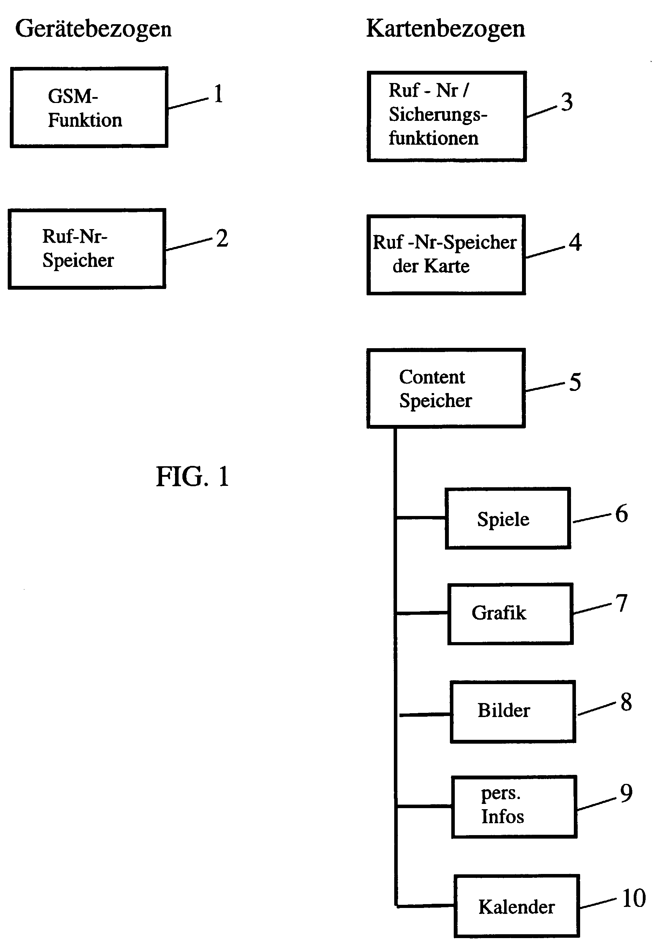

Figur 1 zeigt in Blockdarstellung ein Beispiel einer Funktions- und Speicherstruktur eines Mobiltelefons und einer erfindungsgemäßen Chipkarte.

Das Mobiltelefon beinhaltet gerätebezogene Funktionen, von denen z.B. die GSM-Funktionen 1 und der geräteinterne Rufnummernspeicher 2 zu nennen sind.

Die erfindungsgemäße Chipkarte beinhaltet ebenfalls kartenbezogene Funktionen, wobei zumindest (Rufnummern-) Sicherungsfunktionen 3 und der karteninterne Rufnummernspeicher 4 zu nennen sind, die gewöhnlich auf jeder herkömmlichen Karte zu finden sind.
Als neue Chipkartenfunktion ist ein sogenannter Content-Speicher 5 vorgesehen, der die erfindungsgemäßen Funktionen und Daten beinhaltet.

Der Content-Speicher kann einen oder mehrere Speicherbereiche enthalten, z.B. je einen Speicherbereich für Spiele 6, Grafik 7, Bilder 8, Persönliches 9 und einen Kalender 10 etc.
Die Funktion und Art des Inhalts des Content-Speichers ist frei definierbar und richtet sich, insbesondere bei Spielen, Grafiken und Bildern, nach der zur Verfügung stehenden Speichergröße und Darstellbarkeit auf der Anzeige des Mobiltelefons. Die Speichergrößen heutiger moderner Chipkarten, insbesondere der Chipkarten der nächsten Mobilfunkgeneration (UMTS), bieten für die erfindungsgemäße Anwendung genügend Speicherplatz.

## Patentansprüche

1. Chipkarte für Mobiltelefone,
dadurch gekennzeichnet,
daß in einem Speicher der Chipkarte mindestens ein elektronisches Spiel gespeichert ist.

2. Chipkarte nach Anspruch 1, dadurch gekennzeichnet, daß das Spiel über das Mobiltelefon spielbar ist.

3. Chipkarte für Mobiltelefone,
dadurch gekennzeichnet,
daß in einem Speicher der Chipkarte Grafiken, Bildvorlagen oder Pictogramme gespeichert sind.

4. Chipkarte nach einem der Ansprüche 1 bis 3, dadurch gekennzeichnet, daß der Speicher ein Festwertspeicher (ROM) ist.

5. Chipkarte nach einem der Ansprüche 1 bis 4, dadurch gekennzeichnet, daß der Speicher ein wiederbeschreibbarer Speicher (RAM; EEPROM) ist.

6. Chipkarte nach einem der Ansprüche 1 bis 5, dadurch gekennzeichnet, daß die im Speicher enthaltenen Daten über die Funkschnittstelle des Mobiltelefons ladbar oder veränderbar sind.

7. Chipkarte nach einem der Ansprüche 1 bis 6, dadurch gekennzeichnet, daß sie eine wiederaufladbare Telefonkarte ist.

8. Chipkarte nach einem der Ansprüche 1 bis 7, dadurch gekennzeichnet, daß die im Speicher enthaltenen Daten beim Wiederaufladen der Chipkarte ladbar oder veränderbar sind.

9. Chipkarte nach einem der Ansprüche 1 bis 8, dadurch gekennzeichnet, daß die im Speicher enthaltenen Grafiken, Bildvorlagen oder Pictogramme allein oder zusammen mit anderen Informationen über das Mobiltelefon an Dritte versandt werden können.

10. Chipkarte nach einem der Ansprüche 1 bis 9, dadurch gekennzeichnet, daß die Spielefunktion unabhängig von der Telefonfunktionalität auch nach der Deaktivierung des Rufnummer erhalten bleibt.
